Europäisches Patentamt

**European Patent Office**

**Office européen des brevets**

(19)

(11) Numéro de publication : **0 133 113 B1**

# (12) FASCICULE DE BREVET EUROPÉEN

(45) Date de publication du fascicule du brevet :
08.07.87

(21) Numéro de dépôt : **84401518.0**

(22) Date de dépôt : **19.07.84**

(51) Int. Cl.⁴ : **C 03 B 23/033**, C 03 B 27/04

(54) **Installation à courbure facilement modifiable pour le bombage et la trempe de feuilles de verre.**

(30) Priorité : **20.07.83 FR 8311954**

(43) Date de publication de la demande :
**13.02.85 Bulletin 85/07**

(45) Mention de la délivrance du brevet :
**08.07.87 Bulletin 87/28**

(84) Etats contractants désignés :
**AT BE CH DE FR GB IT LI LU NL SE**

(56) Documents cités :
**FR-A- 2 442 219
US-A- 2 247 118
US-A- 2 308 062**

(73) Titulaire : **SAINT-GOBAIN VITRAGE
Les Miroirs 18, avenue d'Alsace
F-92400 Courbevoie (FR)**

(72) Inventeur : **Bocelli, Aureliano
Via Curtane e Montana 5
I-57100 Livorno (IT)**
Inventeur : **Colombini, Carlo
Via Tosco Romagnola 1455
I-56023 San Prospero (IT)**

(74) Mandataire : **Leconte, Jean-Gérard et al
Saint-Gobain Recherche 39, Quai Lucien Lefranc
F-93304 Aubervilliers Cedex (FR)**

EP 0 133 113 B1

## Description

La présente invention concerne le bombage ou le bombage et la trempe de plaques de verre défilant à plat sur un lit de conformation formé de rouleaux ou de tiges cintrées disposés le long d'un profil courbe et elle se rapporte plus précisément à une installation de bombage ou de bombage et de trempe dont on peut régler et modifier aisément le profil courbe.

Il est connu par la publication française de brevet n° 2 442 219, de bomber puis de tremper des feuilles de verre pendant qu'elles avancent à plat sur un lit de conformation constitué de rouleaux droits ou de tiges cintrées entourées d'une gaine tubulaire tournante comme décrit dans la publication de brevet français 1 476 785, disposés le long d'un profil courbe.

Les feuilles de verre, préalablement chauffées à leur température de ramollissement, prennent progressivement la forme du lit de conformation sur lequel elles avancent ; elles acquièrent une courbure simple dans la direction longitudinale de leur avancement si le lit de conformation est formé de rouleaux droits, s'il est formé de tiges cintrées redressées par pivotement autour de l'axe qui passe par leurs extrémités, elles acquièrent une courbure double, c'est-à-dire qu'en plus de leur courbure longitudinale due au profil longitudinal courbe du lit de conformation, elles se courbent aussi transversalement du fait de la forme et du redressement des tiges cintrées.

Il est prévu dans ce document antérieur FR 1 476 785 de disposer les paliers des rouleaux ou des tiges cintrées en même temps que tous les autres éléments tels que rouleaux de maintien supérieurs, contre-tiges, buses de soufflage de la zone de trempe, sur des lames de ressorts dont on peut ajuster la courbure en agissant sur des tirants et aux extrémités desdites lames.

Avec un tel système, il peut être difficile d'obtenir une courbure régulière et reproductible, toutes les charges supportées par ces lames pouvant altérer leur élasticité et modifier localement leur courbure et l'ensemble pouvant vibrer notamment à cause du soufflage de la trempe.

La présente invention vise à fournir une installation de bombage ou de bombage et de trempe d'un autre type qui en outre, élimine les inconvénients rencontrés précédemment et permet d'obtenir un profil de courbure du lit de conformation parfaitement correct, régulier, stable, conduisant à des vitrages de meilleure qualité.

Pour cela, elle propose une installation parfaitement rigide dans laquelle les possibilités de modification du profil de courbure sont malgré tout conservées.

Cette installation est telle que les rouleaux ou les tiges cintrées et, en général, les organes de support des feuilles de verre ainsi que les autres éléments nécessaires au bombage et/ou à la trempe, sont solidaires d'au moins une bande flexible longitudinalement, cette bande reposant sur un gabarit rigide ayant une forme adaptée à la forme finale désirée des plaques de verre.

Avantageusement, notamment pour des questions d'équilibre, de solidité et de commodité, l'installation comporte deux bandes latérales reposant chacune sur un gabarit.

Dans une forme préférée conférant toute la solidité nécessaire, chaque bande est une chaîne dont les différents maillons s'articulent les uns sur les autres, ces maillons étant munis de flasques auxquels sont fixés les rouleaux ou tiges cintrées et en général les organes de support des feuilles de verre, ainsi que les autres éléments nécessaires au bombage et à la trempe.

Pour permettre une modification du profil de courbure, les gabarits sont amovibles et interchangeables.

Pour faciliter le changement des gabarits, l'installation est dotée d'un système de relevage des bandes ou chaînes comprenant une ou plusieurs poutres pivotantes aptes à être relevées à l'aide de moyens moteurs tels un vérin associé à une bielle coudée, chaque poutre en se redressant prenant en charge une bande ou une chaîne et la dégageant de son gabarit.

L'invention sera maintenant décrite plus en détail en se référant aux figures jointes en annexe qui représentent :

figure 1  une vue schématique de face de l'ensemble de l'installation,

figure 2  une vue schématique de profil des éléments essentiels de l'installation,

figure 3  une vue schématique de profil de l'installation montrant essentiellement les buses de soufflage en position relevée,

figure 4  une vue schématique de dessus de maillons de la prochaine destinés à porter les organes de support des feuilles de verre ainsi que d'autres éléments,

figure 5  une vue schématique de profil des maillons de la figure 4,

figure 6  une coupe montrant le détail de fixation sur un maillon des rouleaux, des contre-rouleaux et du matériel de soufflage,

figure 7  une vue de détail de la platine pivotante permettant le réglage de la position des contre-rouleaux.

figure 8  un détail de montage des rouleaux.

L'installation décrite ci-après à titre d'exemple est une installation de bombage et de trempe de feuilles de verre sur un lit de rouleaux droits disposés le long d'un profil courbe à convexité tournée vers le haut.

Toutefois, les rouleaux droits pourraient être remplacés par d'autres organes de support des feuilles de verre pendant leur défilement, par exemple des tiges cintrées entourées d'une gaine tubulaire tournante, des galets, des plots de soufflage permettant de pratiquer une sustentation des feuilles de verre sur un coussin gazeux, etc, sans que l'invention soit changée. Dans ce cas, les moyens de maintien supérieurs des feuilles de verre qui dans notre exemple sont des contre-rouleaux droits associés à des rouleaux de support droits également, seront remplacés par des moyens de maintien adaptés à la nature et à la forme des organes de support auxquels ils seront associés. Ainsi, lorsque les organes de support seront des tiges cintrées entourées de gaines tubulaires tournantes comme connu notamment par la publication de brevet français n° 2 442 219 déjà citée, les moyens de maintien supérieurs pourront être des contre-tiges cintrées également, entourées de gaines tubulaires comme décrit dans les publications de brevets français 1 476 785, 2 129 919.

De la même façon, le profil courbe pourrait avoir une autre forme, en particulier avoir sa concavité tournée vers le haut de l'installation sans pour cela sortir du domaine de l'invention.

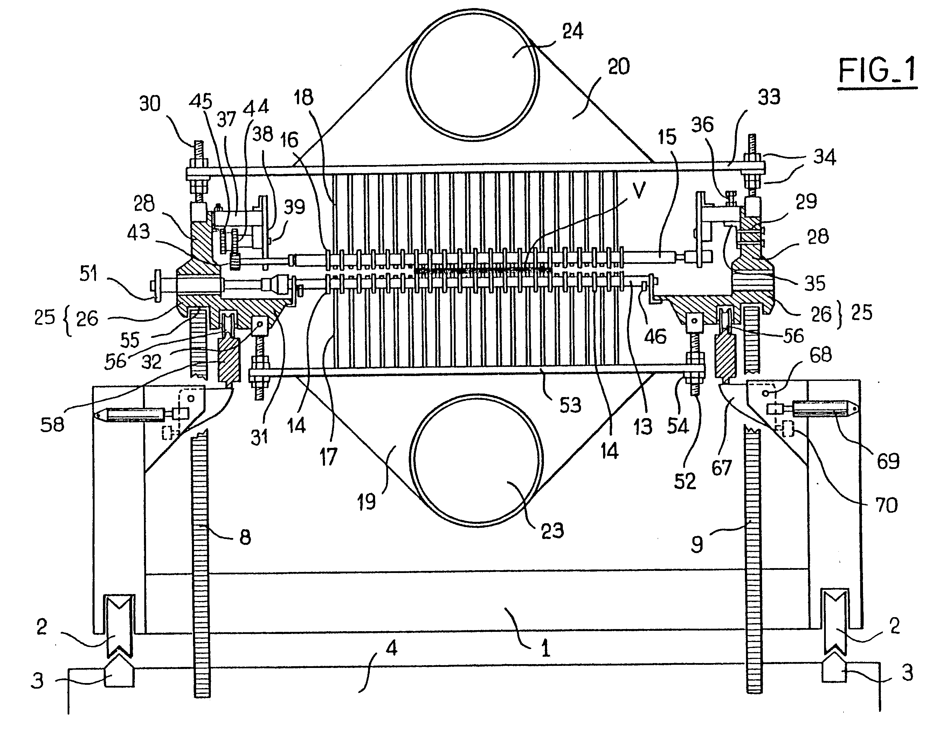

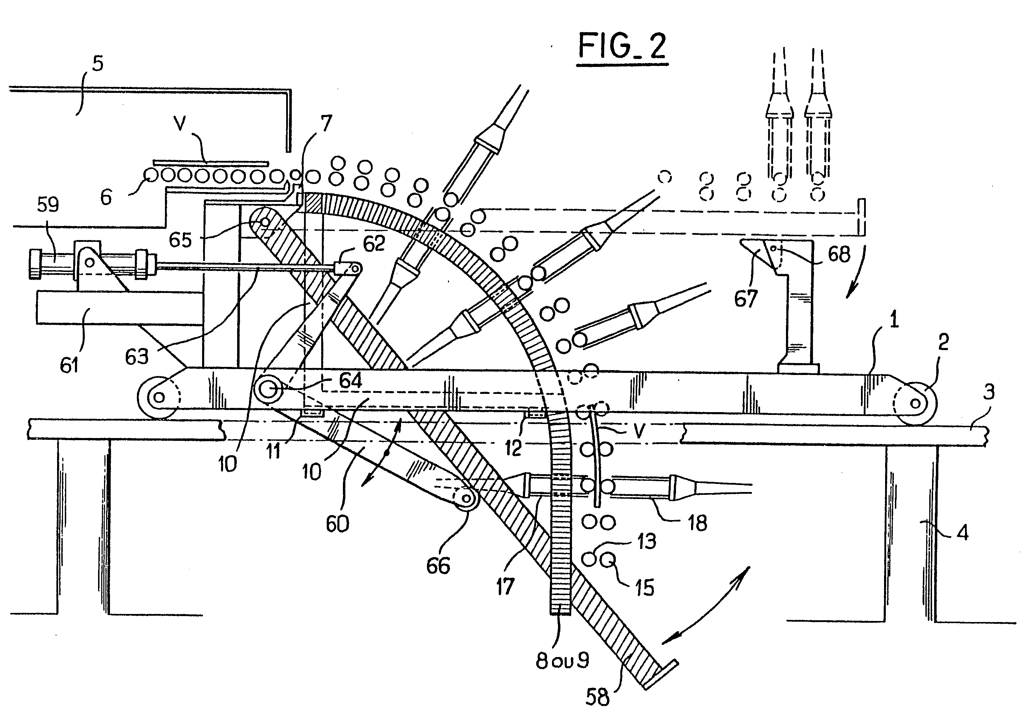

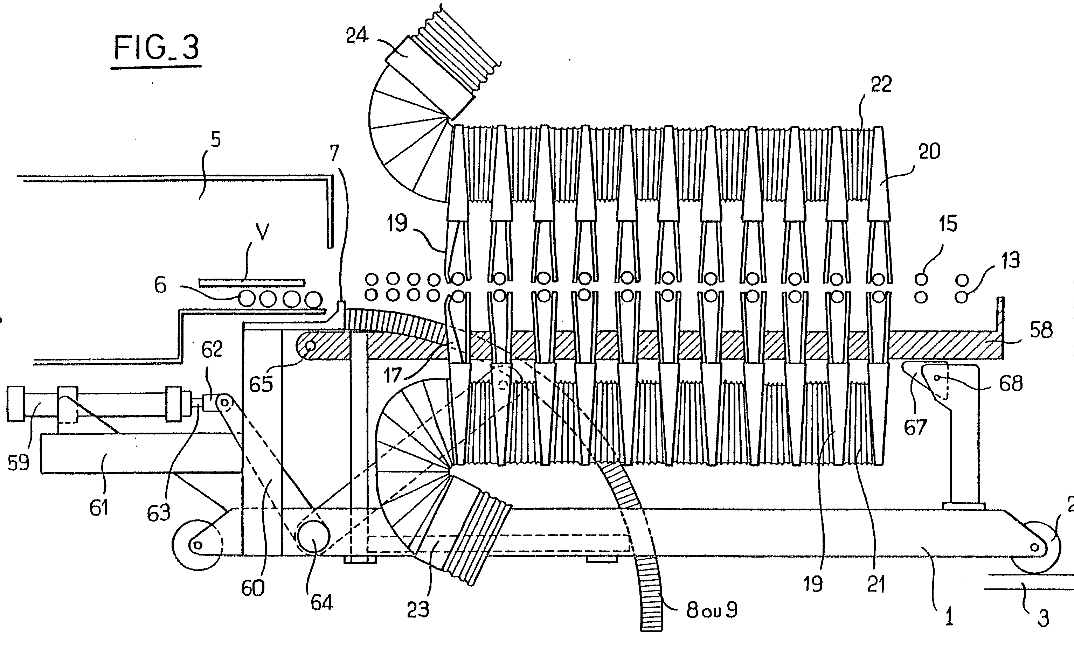

Comme cela est plus particulièrement visible sur les figures 1, 2 et 3, l'installation objet de l'invention comporte un chariot 1 sur roues 2, déplaçable sur des rails 3 appartenant au bâti général 4 d'une ligne de fabrication de vitrages, ledit chariot 1 portant un poste de bombage complet, ou un poste de bombage et un poste de trempe complets et pouvant être glissé en bout d'un four 5 de réchauffage (fig. 2 et 3) de façon à recevoir des plaques des verres V qui traversent le four 5 sur un transporteur à rouleaux 6. Ce chariot possède une butée 7 par laquelle il s'appuie sur la face frontale du four 5 lorsqu'il est parfaitement en place.

Il porte d'abord deux gabarits 8 et 9 rigidifiés par un cadre 10 (fig. 2), disposés latéralement de chaque côté du chemin le long duquel les plaques de verre V sortant du four 5 vont défiler, dans des encoches 11 et 12 du chariot 1 prévues à cet effet. Ces gabarits 8 et 9 sont montés de façon à être facilement amovibles.

Sur les figures, ces gabarits 8 et 9 sont représentés avec leur convexité tournée vers le haut. L'installation selon l'invention pourrait fonctionner aussi avec un seul gabarit, ou avec plus de deux gabarits, cependant pour des questions d'encombrement, de stabilité et de rigidité, de facilité d'intervention lors des modifications du profil de courbure par changement de gabarit(s), le choix de deux gabarits est avantageux.

Il porte ensuite tous les organes de support, tous les moyens de maintien des plaques de verre V, tout le matériel de soufflage lorsqu'un poste de trempe est prévu, ainsi qu'un moyen moteur permettant de redresser les organes de support, les moyens de maintien, le matériel de soufflage pour les dégager des gabarits 8 et 9.

Dans l'exemple décrit, les organes de support sont des rouleaux rectilignes 13 éventuellement entourés de bagues 14 sur lesquelles portent les plaques de verre V, les moyens de maintien sont des contre-rouleaux 15 également rectilignes comme les rouleaux 13 auxquels ils sont associés, éventuellement entourés de bagues 16, le matériel de soufflage, plus particulièrement visible figure 3, est constitué de buses inférieures 17 et de buses supérieures 18 dont l'extrémité libre est proche de la génératrice supérieure des rouleaux inférieurs 13 ou des bagues 14 lorsqu'ils en sont munis pour ce qui concerne les buses 17 devant agir sur la face inférieure des plaques de verre V, de la génératrice inférieure des contre-rouleaux 15 ou des bagues 16 lorsqu'ils en sont munis pour ce qui concerne les buses 18 devant agir sur la face supérieure des plaques de verre V. Ces buses 17 et 18 sont alimentées par des caissons de soufflage 19,20 reliés entre eux par des gaines déformables à soufflets 21,22, et terminés par un raccord flexible 23,24, branché sur une conduite d'amenée de gaz comprimé, en général de l'air, non représentée.

Tous ces organes de support, ces moyens de maintien, le matériel de soufflage sont fixés sur deux bandes déformables verticalement, disposées latéralement à l'aplomb des gabarits 8 et 9, fixées à l'avant du chariot 1 par exemple sur la pièce 7 formant butée, et qui s'appuient sur les gabarits 8 et 9. Le nombre de bandes déformables est le même que celui de gabarits et dans la mesure où un nombre de gabarits différent de deux est prévu, le nombre de bandes est également différent de deux. La hauteur de fixation de ces bandes sur la pièce 7 est telle que les organes de support qu'elles soutiennent soient au même niveau que les rouleaux 6 du transporteur situé en amont.

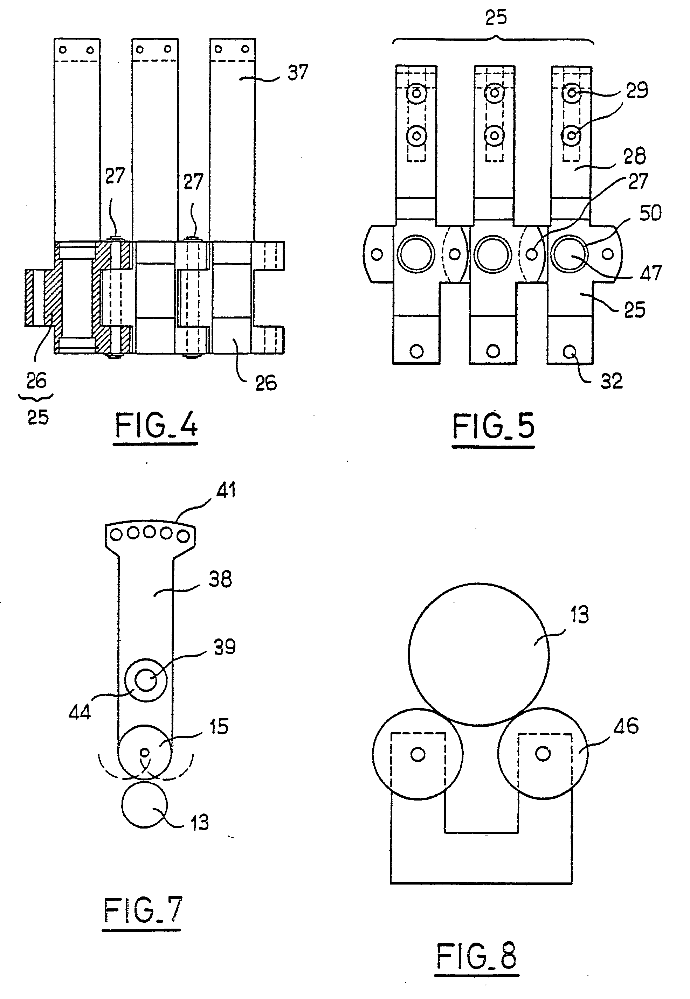

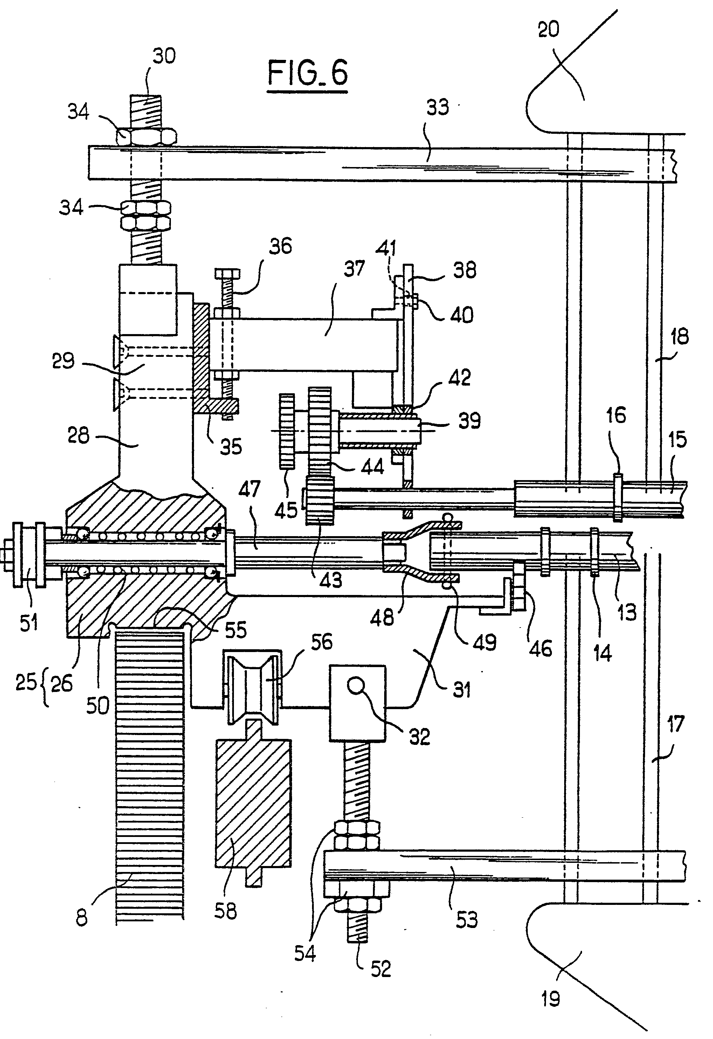

Dans notre exemple décrit, chacune de ces bandes déformables est une chaîne 25 dont les maillons tels que 26 montrés dans une vue de dessus figure 4 et dans une vue de profil figure 5 s'articulent les uns sur les autres autour d'axes horizontaux tels que 27.

Chaque maillon 26 est, comme montré figure 5, prolongé verticalement vers le haut par une plaque 28 percée d'alésages 29, surmontée d'une tige verticale filetée 30 et vers le bas par une excroissance 31 percée d'un alésage 32.

Des maillons 26 du même ordre, appartenant aux deux chaînes 25 parallèles sont reliés par des poutres 33 dont les extrémités percées sont engagées sur les tiges filetées 30.

Des groupes d'écrous 34 permettent d'ajuster la hauteur des poutres 33 sur les tiges 30 et de les bloquer. Ces poutres 33 visibles sur les figures 1 et 6, s'étendent au travers de l'installation, perpendiculairement à la direction d'avancement des plaques de verre V et elles supportent le matériel de soufflage supérieur, à savoir les caissons 20, les gaines déformables 22 qui les relient, les raccords flexibles 24 et les buses 18 dirigées vers la face supérieure des plaques de verre V à tremper. Les alésages 29 servent à tenir sur les plaques 28 des maillons 26, des équerres 35 sur lesquelles sont fixés, à un niveau réglage grâce à un système 36 de vis et d'écrous, des flasques horizontaux 37 destinés à soutenir les moyens de maintien supérieurs des plaques de verre V, en l'occurrence dans notre exemple décrit, les contre-rouleaux 15. Chaque flasque horizontal 37 supporte une platine 38 détaillée figure 7, montée pivotante par rapport audit flasque autour d'un axe de pivotement 39 et blocable après choix de l'une des multiples orientations possibles, par une vis 40 vissée dans le flasque 37 au travers de l'une des lumières 41 pratiquées dans la platine 38. Dans notre exemple de réalisation décrit et montré sur les figures, cinq lumières 41 autorisant un choix entre cinq orientations différentes des platines 38, est prévu.

Les platines 38 soutiennent à leur extrémité basse des paliers 42 dans lesquels peuvent tourner les contre-rouleaux 15. Au moins une des extrémités d'un contre-rouleau 15 porte un pignon 43 qui engrène sur un pignon d'entraînement 44 accolé à une poulie à gorge ou un pignon moteur 45, montés tournants sur un prolongement de l'axe de pivotement 39 de la platine 38 par rapport au flasque 37. Les poulies à gorge ou les pignons moteurs 45 sont reliés par une courroie ou une chaîne non figurée qui passe sur un arbre moteur également non figuré.

Chaque contre-rouleau 15 est monté tournant dans les paliers 42 des platines 38 fixées sur deux maillons 26 correspondants et appartenant aux deux chaînes parallèles 25.

Les excroissances 31 portent des groupes de deux galets 46, détaillés figure 8 et également visibles figure 6, libres en rotation, et formant berceau pour soutenir les rouleaux 13. Chaque rouleau 13 repose ainsi sur les deux groupes de galets 46 fixés sur les excroissances 31 de deux maillons 26 du même ordre appartenant chacun à une des deux chaînes parallèles 25. Les rouleaux 13 sont reliés par au moins une de leurs extrémités à un arbre 47 par l'intermédiaire d'un manchon 48 serré sur ladite extrémité par un ressort annulaire 49. L'arbre 47 traverse le maillon 26 de chaîne 25 et tourne dans un roulement 50 incorporé audit maillon 26. De l'autre côté du maillon 26, l'extrémité de l'arbre 47 porte un pignon 51 destiné à engrener sur une chaîne non représentée qui engrène également sur les autres pignons 51 des autres arbres 47 accouplés aux autres rouleaux 13, et sur un pignon moteur mu par un moteur non représentés.

Les alésages 32 percés dans les excroissances 31 des maillons 26 sont destinés à porter des tiges filetées verticales 52 auxquelles sont suspendues des poutres transversales 53. Des ensembles d'écrous 54 permettent de régler le niveau de ces poutres 53 et de les bloquer.

Chaque poutre 53 relie deux maillons 26 du même ordre et appartenant chacun à une des deux chaînes parallèles 25.

Comme montré plus particulièrement sur la figure 1, ces poutres 53 soutiennent le matériel de soufflage inférieur, à savoir les caissons 19, les gaines déformables 21 qui les relient, les raccords flexibles 23 et les buses 17 dirigées vers la face inférieure des plaques de verre V à tremper.

Chaque maillon 26 possède sur son côté inférieur, un épaulement 55 destiné à constituer le siège par lequel le maillon repose sur le gabarit 8 ou 9. Chaque maillon 26 possède également sur son côté inférieur un décrochement dans lequel est fixé libre en rotation un galet 56 destiné à reposer lors du relevage des chaînes 25 en vue du changement de gabarit 8 et 9, sur un rail 57 porté par une poutre longitudinale 58 appartenant au système de relevage des chaînes 25 décrit plus loin.

Chaque maillon 26 peut porter l'ensemble des équipements décrits ci-dessus ou seuls certains maillons peuvent être équipés soit d'une partie, soit de la totalité desdits équipements.

Dans la mesure où les organes de support, de maintien des plaques de verre ne sont plus des rouleaux ou des contre-rouleaux rectilignes, mais au contraire, des tiges cintrées et des contre-tiges cintrées entourées chacune de gaines tubulaires tournantes, les mécanismes de pivotement des tiges et contre-tiges permettant de modifier la courbure transversale du lit de conformation, sont également portés par les maillons 26. Le montage desdites tiges et contre-tiges diffère légèrement du montage décrit pour les rouleaux et contre-rouleaux rectilignes, en particulier le système de berceau à galets 46, le système d'entraînement par manchon 48 ; cependant il s'agit là d'adaptations par rapport à l'installation décrite, qui sont à la portée de l'homme de l'art.

L'installation comporte également un système de relevage des chaînes 25 permettant de dégager les gabarits 8 et 9 en vue de les changer. Ce système de relevage, plus particulièrement visible sur la figure 2, possède essentiellement un moyen moteur tel un vérin 59, des poutres pivotantes 58 déjà mentionnées et dirigées suivant la direction longitudinale d'avancement des plaques de verre V, et des bielles coudées 60 transmettant le mouvement du vérin aux poutres 58. L'ensemble de ce système de relevage est porté par le chariot 1. A cet effet, l'avant du chariot 1, c'est-à-dire l'extrémité amont qui se place contre le four 5 de réchauffage, est équipée d'une plateforme 61, de préférence basse ou décalée latéralement pour pouvoir s'insérer sous le four 5 ou sur un de ses côtés, plateforme qui porte le vérin 59. La tête 62 de la tige 63 de vérin 59 est reliée à au moins une tête de bielle coudée 60 articulée sur le chariot 1 autour d'un pivot 64. Les poutres 58 sont montées pivotantes autour d'axes de pivotement 65 appartenant au chariot 1. Dans la mesure où l'installation possède deux chaînes 25, deux poutres pivotantes 58 sont prévues sous les chaînes, et plus précisément sous les galets 56 fixés dans les décrochements des excroissances 31 des maillons 26. Dans ce cas, le pivotement des deux poutres 58 peut être obtenu avec un seul vérin 59 et une seule bielle coudée 60 agissant sur une seule poutre 58, la transmission du pivotement de cette poutre à l'autre poutre placée de l'autre côté de l'installation étant faite par un arbre cannelé non figuré et concentrique à leur axe de pivotement 65 ou par une barre également non figurée et joignant lesdites deux poutres 58. Dans une variante, chaque poutre 58 peut être associée à une bielle coudée 60, un seul vérin 59, pouvant alors agir sur une barre non figurée réunissant les deux têtes de bielles coudées 60 ou sur une seule tête de bielle 60, la seconde bielle 60 étant liée à la première soit par un arbre cannelé soit par une barre de solidarisation non représentés.

Dans une autre variante, on peut prévoir un vérin 59 pour chaque bielle 60.

La où les bielles 60 sont terminées par un galet 66, à leur extrémité libre opposée à la tête de bielle liée à la tête 62 de tige de vérin 59.

Comme montré figure 1, le chariot 1 peut avantageusement être équipé de volets 67 pivotants autour d'un axe 68 sous l'action d'un vérin 69 destinés à venir soutenir les poutres 68 lorsqu'elles ont été redressées et qu'elles sont chargées des chaînes 25 et de tous les équipements de bombage et de trempe qu'elles portent. Une butée 70 de blocage de ces volets 67 en position ouverte peut également être prévue.

L'installation décrite fonctionne de la façon suivante :

Un profil de courbure du lit de confirmation, en vue d'obtenir les vitrages voulus est d'abord déterminé et des gabarits 8 et 9 appropriés sont mis en place dans les encoches 11 et 12 du chariot 1, les chaînes 25 étant relevées et reposant sur les poutres 58 redressées pratiquement à l'horizontale par le système de relevage. Par mesure de sécurité et pour soulager le vérin 59 dudit système de relevage, les volets 67 sont ouverts et bloqués en position d'ouverture par les butées 70. Les gabarits 8 et 9 étant en place, les chaînes 25 peuvent être reposées sur lesdits gabarits. Pour ce faire, les butées 70 étant enlevées, les vérins 69 referment les volets 67, et le système de relevage revient progressivement en position de repos. Les poutres 58 initialement pratiquement horizontales s'abaissent progressivement en pivotant autour de leur axe de pivotement 65. Les bielles coudées 60 tournent autour de leur pivot 64, roulent par leur galet 66 le long des poutres 58 et repoussent la tige de vérin 59. Au fur et à mesure que les maillons 26 rencontrent les gabarits 8 et 9, ils y prennent appui et le contact de leurs galets 56 avec les poutres 58 cesse. Les différents maillons 26 s'articulent les uns sur les autres et s'appliquent sur les gabarits jusqu'à les épouser sur toute leur longueur. En même temps que les maillons 26 qui les portent, les rouleaux 13, les contre-rouleaux 15, le matériel de soufflage dans les zones de l'installation où la trempe est prévue, s'organisent autour des gabarits, ces différents éléments s'orientent automatiquement du fait de la construction, perpendiculairement à la trajectoire que vont suivre les plaques de verre V entre les rouleaux 13 et les contre-rouleaux 15. La hauteur des buses supérieures 18 peut être règlée par action sur les écrous 34 vissés sur les tiges filetées 30 ; de la même les écrous 54 peuvent être manœuvrés, ce qui permet d'ajuster le niveau des poutres 53 et en conséquence, des buses inférieures 17. La hauteur des contre-rouleaux 15 peut également être règlée pour permettre le passage des plaques de verre V de différentes épaisseurs, par action sur le système 36 de vis et d'écrous. La position des contre-rouleaux 15 par rapport aux rouleaux 13 auxquels ils sont associés peut également être modifiée par pivotement des platines 38 autour des axes 39. Différentes positions possibles d'un contre-rouleau 15 par rapport à un rouleau 13 sont dessinées en pointillés sur la figure 7. Après choix de l'orientation la plus favorable, une vis 40 vissée au travers d'une lumière 41 fixe la platine 38.

L'ensemble de l'installation étant règlée, si le chariot a été sorti de la ligne de fabrication, il est glissé sur ses rails 3 jusqu'à contact de sa butée 7 avec la face frontale du four 5. La plateforme 61 se loge alors, soit sous le four 5, soit sur le côté dudit four 5.

Les rouleaux 13 et contre-rouleaux 15 sont entraînés en rotation à l'aide de chaînes et de moyens moteurs classiques non figurés sur les dessins ; des plaques de verre V arrivent sur les rouleaux 6 du transporteur traversant le four 5, s'engagent sur les rouleaux 13 de l'installation, épousent progressivement le profil courbe le long duquel lesdits rouleaux sont disposés, sont maintenus par les contre-rouleaux 15, puis pénètrent dans la zone de trempe de l'installation pourvue de buses de soufflage 17 et 18 lesquelles soufflent un air de refroidissement.

Les plaques de verre V bombées et trempées sont ensuite récupérées à la sortie de l'installation grâce à des moyens de récupération non décrits ici, connus de l'homme de l'art et par exemple mentionnés dans la publication française de brevet 2 442 219 déja citée.

Lorsqu'après fonctionnement on désire à nouveau changer de gabarits 8 et 9 en vue de la fabrication d'un autre modèle de vitrages, on interrompt la rotation des rouleaux 13 et contre-rouleaux 15, et le soufflage des buses 17 et 18, on active le vérin 59 qui fait pivoter les bielles coudées 60, lesquelles en pivotant soulèvent à l'aide des galets 66 les poutres 58. Celles-ci rencontrent au fur et à mesure de leur redressement les galets 56 solidaires des maillons 26, les soulèvent et dégagent ainsi les chaînes 25 des gabarits.

Le fonctionnement est identique avec d'autres organes de support et d'autres moyens de maintien des plaques de verre, avec d'autres formes de gabarits.

Cette installation permet une grande précision de forme du lit de conformation, donc une grande précision de forme des vitrages fabriqués et permet des changements faciles de forme dudit lit de conformation.

**Revendications**

1. Installation de bombage ou de bombage et de trempe dans laquelle des plaques de verre V défilent sur un lit de conformation constitué d'organes de support des plaques de verre, tels que des rouleaux ou des tiges cintrées recouvertes de gaines tubulaires tournantes, disposés le long d'un profil courbe, caractérisée en ce que les organes de support ainsi que les autres éléments nécessaires au bombage et/ou à la trempe sont solidaires d'au moins une bande flexible longitudinalement et en ce que cette bande repose sur un gabarit (8,9) ayant une forme adaptée à la forme finale désirée des plaques de verre.

2. Installation selon la revendication 1, caractérisée en ce qu'elle comporte deux bandes latérales reposant chacune sur un gabarit (8,9).

3. Installation selon l'une des revendications 1 ou 2, caractérisée en ce que chaque bande est une chaîne (25) dont les différents maillons (26) s'articulent les uns sur les autres, chaque maillon étant muni de flasques, d'excroissances, de tiges, auxquels sont fixés les organes de support du verre tels que rouleaux ou tiges cintrées, ainsi que les autres éléments nécessaires au bombage et/ou à la trempe.

4. Installation selon l'une des revendications précédentes, caractérisée en ce que chaque gabarit est amovible et interchangeable, permettant de modifier le profil de courbure.

5. Installation selon l'une des revendications précédentes, caractérisée en ce qu'elle est montée sur un chariot (1) glissant sur des rails (3).

6. Installation selon la revendication 5, caractérisée en ce qu'elle possède un système de relevage des bandes flexibles ou chaînes (25) pour les dégager des gabarits (8,9) comprenant une poutre (58) pour chaque bande ou chaîne (25) montée pivotante par une de ses extrémités sur le chariot (1), disposée sous chaque bande ou chaîne (25), au moins un moyen moteur tel un vérin (59) associé à au moins une bielle coudée (60) pivotante sur un pivot (64) apte à redresser les poutres (58) en les faisant pivoter autour de leur axe de pivotement (65) sur le chariot (1).

7. Installation selon la revendication 6, caractérisée en ce que chaque bande ou chaîne est munie de proche en proche de galets inférieurs (56) destinés à porter sur les poutres (58) de relevage.

8. Installation selon l'une des revendications précédentes, caractérisée en ce que les éléments nécessaires au bombage et à la trempe sont essentiellement des moyens de maintien supérieurs tels des contre-rouleaux (15) ou des contre-tiges cintrées, des buses de soufflage (17,18).

9. Installation selon la revendication 8, caractérisée en ce que chaque moyen de maintien supérieur, contre-rouleau 15 ou contre-tige est monté sur des platines (38) attachées à des flasques horizontaux (37) appartenant à deux maillons (26) correspondants appartenant chacun à une chaîne (25) ou bande flexible, lesdites platines (38) étant pivotantes autour de leur point d'attache (39) permettant ainsi de règler la position du moyen de maintien qu'elles portent par rapport à l'organe de support, rouleau 13 ou tige cintrée, auquel il est associé.

10. Installation selon l'une des revendications 8 ou 9, caractérisée en ce que les buses de soufflage (17,18) sont solidaires de caissons (19,20) reliés entre eux par des gaines déformables à soufflets (21,22) lesdits caissons et lesdites gaines étant portés également par les bandes flexibles ou chaînes (25).

11. Installation selon les revendications précédentes, caractérisée en ce que les gabarits (8,9) sont à convexité tournée vers le haut et reposent sur le chariot (1).

## Claims

1. Apparatus for curving or curving and tempering in which glass plates V move on a shaping bed comprising support members for the glass plates, such as rollers or curved rods covered by rotatable tubular sheaths, arranged along a curved profile, characterised in that the support members and the other elements necessary for curving and/or tempering are integral with at least one longitudinal flexible band and in that the band rests on a jig (8,9) having a shape adapted to the desired final shape of the glass plates.

2. Apparatus according to claim 1, characterised in that it comprises two lateral bands each resting on a jig (8,9).

3. Apparatus according to claim 1 or 2, characterised in that each band is a chain (25) of which the different links (26) are articulated to each other, each link being provided with plates, projections or rods to which are fixed the support members for the glass such as rollers or curved rods, and also the other elements necessary for curving and/or tempering.

4. Apparatus according to any one of the preceding claims, characterised in that each jig is detachable and interchangeable, allowing modification of the curved profile.

5. Apparatus according to any one of the preceding claims, characterised in that it is mounted on a carriage (1) movable on rails.

6. Apparatus according to claim 5, characterised in that it comprises a system for relieving the flexible bands or chains (25) to disengage them from the jigs (8,9) comprising a beam (58) for each band or chain (25) mounted to pivot at one of its ends on the carriage (1), arranged below each band or chain (25), and at least one motor means such as a jack (59) associated with at least one angled crank rod (60) pivoting on a pivot (64) capable of operating on the beams (58) and causing them to pivot about their pivoting axis (65) on the carriage (1).

7. Apparatus according to claim 6, characterised in that each band or chain is provided at intervals with lower wheels (56) intended to bear on the relieving beams (58).

8. Apparatus according to any one of the preceding claims, characterised in that the elements necessary for curving and tempering are essentially upper holding means such as counter-rollers (15) or counter-curved rods, and blowing nozzles (17,18).

9. Apparatus according to claim 8, characterised in that each upper holding means, counter-roller 15 or counter-rod is mounted on plates (38) attached to horizontal side plates (37) associated with two corresponding links (26) each associated with a chain (25) or flexible band, said plates (38) being pivoted about their point of attachment (39) thus allowing adjustment of the position of the holding means which they carry relative to the support member, roller 13 or curved rod, with which it is associated.

10. Apparatus according to claim 8 or 9, characterised in that the blowing nozzles (17,18) are integral with boxes (19,20) connected by deformable bellows sheaths (21,22) said boxes and said sheaths also being supported by the flexible bands or chains (25).

11. Apparatus according to any one of the preceding claims, characterised in that the jigs (8,9) have a convexity directed upwardly and rest on the carriage (1).

## Patentansprüche

1. Vorrichtung zum Wölben oder Wölben und Vorspannen von Glasscheiben V, in welcher die Glasscheiben auf einem Formbett geführt werden, welches von Stützorganen für die Glasscheiben, insbesondere Walzen oder runden, von drehbaren rohrförmigen Hülsen umgebenen Stangen gebildet sind, welche längs eines gekrümmten Profils angeordnet sind, dadurch gekennzeichnet, daß die Stützorgane sowie die anderen für die Wölbung und/oder die Vorspannung erforderlichen Elemente mit mindestens einem langgestreckten flexiblen Band verbunden sind, welches auf einem der gewünschten Endform der Glasscheiben angepaßten Formstück (8,9) angeordnet ist.

2. Vorrichtung nach Anspruch 1, dadurch gekennzeichnet, daß zwei seitliche Bänder vorgesehen sind, die je auf einem Formstück (8,9) angeordnet sind.

3. Vorrichtung nach einem der Ansprüche 1 oder 2, dadurch gekennzeichnet, daß jedes Band durch eine Kette (25) gebildet ist, deren verschiedene Glieder (26) gelenkig miteinander verbunden sind, wobei jedes Glied Flansche, Fortsätze und Stangen aufweist, an denen die Stützorgane für die Glasscheiben, wie Rollen oder runde Stangen, sowie die anderen für die Wölbung und/oder die Vorspannung erforderlichen Elemente befestigt sind.

4. Vorrichtung nach einem der vorhergehenden Ansprüche, dadurch gekennzeichnet, daß zwecks Veränderung des Krümmungsprofils jedes Formstück abnehmbar und austauschbar ist.

5. Vorrichtung nach einem der vorhergehenden Ansprüche, dadurch gekennzeichnet, daß die Vorrichtung auf einem auf Schienen (3) verfahrbaren Schlitten (1) angeordnet ist.

6. Vorrichtung nach Anspruch 5, dadurch gekennzeichnet, daß die Vorrichtung eine Hubeinrichtung zum Abheben der flexiblen Bänder oder Ketten (25) von den Formstücken (8,9) aufweist, die einen Träger (58) für jedes Band oder jede Kette (25) umfaßt, welcher mit einem seiner Enden auf dem Schlitten (1) schwenkbar und unter einem jeden Band oder Kette (25) angeordnet ist, und daß mindestens ein Antrieb, insbesondere ein Schubkolbengetriebe (59) vorgesehen ist, welches mit mindestens einer gekröpften und um ein Gelenk (64) schwenkbaren Kurbel (64) verbunden ist, so daß die Träger (58) durch Verschwenken um ihre Schwenkachse (65) auf dem Schlitten (1) aufrichtbar sind.

7. Vorrichtung nach Anspruch 6, dadurch gekennzeichnet, daß jedes Band oder jede Kette mit unteren Rollen (56) zur Auflagerung auf den Hubträgern (58) versehen ist.

8. Vorrichtung nach einem der vorhergehenden Ansprüche, dadurch gekennzeichnet, daß die für die Wölbung und die Vorspannung erforderlichen Elemente im wesentlichen obere Halteglieder, Gegendruckrollen (15) oder runde Gegendruckstangen und Blasdüsen (17,18) sind.

9. Vorrichtung nach Anspruch 8, dadurch gekennzeichnet, daß jedes obere Halteglied, Gegendruckwalze (15) oder Gegendruckstange auf Platinen (38) angeordnet ist, welche an horizontalen Flanschen (37) befestigt sind, welche zu zwei entsprechenden Gliedern (26) jeweils einer Kette (25) oder eines flexiblen Bands gehören, wobei diese Platinen (38) um ihren Befestigungspunkt (39) schwenkbar sind, so daß die Stellung des Halteglieds, das sie tragen, gegenüber dem Stützorgan, der Walze (13) oder der Stange, dem es zugeordnet ist, verstellbar ist.

10. Vorrichtung nach einem der Ansprüche 8 oder 9, dadurch gekennzeichnet, daß die Blasdüsen (17,18) mit Kästen (19,20) verbunden sind, die untereinander durch deformierbare hüllenartige Balgen (21,22) verbunden sind, wobei die Kästen und die Balgen durch die flexiblen Bänder oder Ketten (25) getragen sind.

11. Vorrichtung nach den vorhergehenden Ansprüche, dadurch gekennzeichnet, daß die Formstücke (8,9) konvex mit der konvexen Wölbung nach oben ausgebildet und auf dem Schlitten (1) gelagert sind.

FIG_1

0 133 113

FIG_2

FIG_3

FIG_4

FIG_5

FIG_7

FIG_8

0 133 113

FIG.6

5